(19) Europäisches Patentamt
European Patent Office
Office européen des brevets

(11) **EP 1 745 329 B1**

(12) **FASCICULE DE BREVET EUROPEEN**

(45) Date de publication et mention
de la délivrance du brevet:
**04.05.2016 Bulletin 2016/18**

(21) Numéro de dépôt: **05717161.3**

(22) Date de dépôt: **30.03.2005**

(51) Int Cl.:
*H04N 5/74* *(2006.01)*    *G03B 21/28* *(2006.01)*
*G03B 21/10* *(2006.01)*

(86) Numéro de dépôt international:
**PCT/EP2005/051432**

(87) Numéro de publication internationale:
**WO 2005/096094 (13.10.2005 Gazette 2005/41)**

(54) **MODULE DE PROJECTION ET PROJECTEUR L'INCORPORANT**

PROJEKTIONSMODUL UND DIESES ENTHALTENDER PROJEKTOR

PROJECTION MODULE AND PROJECTOR INCORPORATING SAME

(84) Etats contractants désignés:
**DE FR GB**

(30) Priorité: **30.03.2004 FR 0403335**
**03.12.2004 FR 0412904**

(43) Date de publication de la demande:
**24.01.2007 Bulletin 2007/04**

(73) Titulaire: **Thomson Licensing**
**92130 Issy-les-Moulineaux (FR)**

(72) Inventeurs:
• **SACRE, Jean-Jacques**
**F-35410 CHATEAUGIRON (FR)**
• **BENOIT, Pascal**
**F-35340 LIFFRE (FR)**

(74) Mandataire: **Novagraaf Technologies**
**12 Place des Halles Saint Louis**
**56100 Lorient (FR)**

(56) Documents cités:
**EP-A- 1 203 977**        **DE-C1- 19 737 861**
**US-A- 4 129 364**        **US-A- 5 716 118**
**US-A1- 2002 057 421**   **US-A1- 2002 181 130**

**Description**

**1. Domaine de l'invention.**

L'invention concerne un module de projection permettant d'obtenir un grand angle de projection sans déformation. L'invention concerne également l'application d'un tel module à des appareils de projection frontaux et de rétroprojection.

**2. Etat de l'art.**

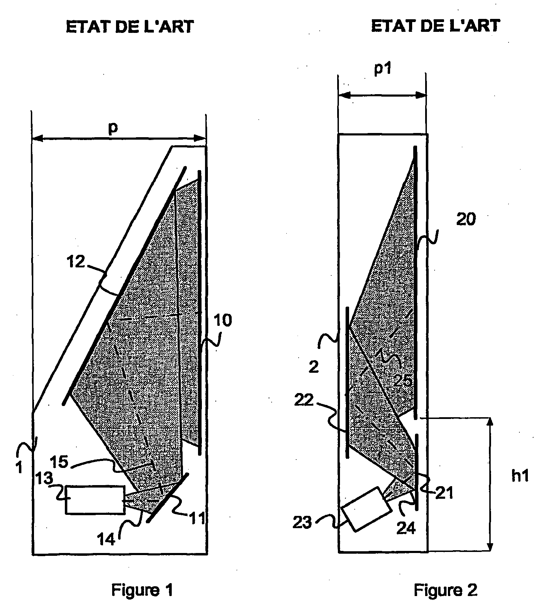

La **figure 1** représente une conception conventionnelle d'un rétroprojecteur 1 dont l'axe optique est centré sur l'écran et comprenant un objectif 13, deux miroirs de renvoi plans 11 et 12 et un écran 10 également plan. Dans cette conception, le faisceau d'éclairement 14 émis par le projecteur est replié par les miroirs de renvoi 11 et 12. Le système est symétrique par rapport à un plan normal à l'écran 10, l'axe optique 15 du faisceau étant dans ce plan. Le projecteur 1 peut atteindre 45 centimètres d'épaisseur, $p$, pour un écran 10 de dimensions 1106 sur 622 millimètres. L'angle d'ouverture selon la diagonale de l'écran doit être d'environ 38°. Une distorsion et une MTF (de l'anglais « Modulation Tranfer Fonction» ou « Fonction de Transfert de Modulation » en français) acceptables peuvent être obtenus avec un objectif d'une dizaine de lentilles à un coût modéré.

Une autre conception est de replier deux fois le faisceau comme cela est représenté en **figure 2**. Le rétroprojecteur 2 illustré dans cette figure comprend un objectif 23 et deux miroirs de renvoi plans 21 et 22 disposés face à face qui sont parallèles à un écran 20. L'axe de l'objectif de projection 23 n'est pas perpendiculaire au centre de l'écran 20. On peut ainsi réduire la profondeur $p1$ du rétroprojecteur (par exemple voisine de 20 cm). Néanmoins, la hauteur $h1$ de la partie basse du rétroprojecteur 2 (c'est-à-dire située en dessous de écran) reste élevée.

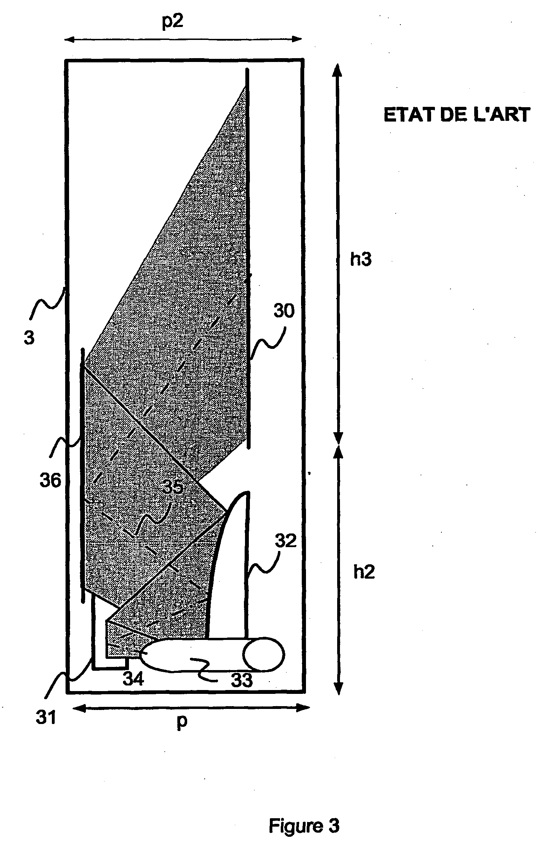

Le document de demande de brevet EP 1203977 déposée par la société Mitsubishi ® décrit plusieurs modes de réalisation de rétroprojecteurs vidéo comprenant un miroir de renvoi asphérique qui permet de réduire les aberrations optiques et l'encombrement du projecteur. La **figure 3** illustre un rétroprojecteur 3 comprenant un objectif 33, un premier miroir de renvoi plan 31, un miroir de renvoi asphérique 32, un second miroir de renvoi plan 36 et un écran 30. L'objectif 33 faisant un angle d'environ 60° avec la normale à écran, le faisceau émis 34 est d'abord renvoyé dans une direction normale à l'écran 30 par le miroir 34, vers le miroir asphérique 32. Le faisceau est alors replié une fois par le miroir 36 avant d'atteindre l'écran 30. Ainsi, l'encombrement est réduit Néanmoins, le rétroprojecteur 2 présente l'inconvénient de rester encore encombrant.

Autres rétroprojecteurs de l'art antérieur sont divulgés par US 2002/0181130 A1, US 2002/0057421 A1 et DE 19737861 C1.

**3. Résumé de l'invention.**

L'invention a pour objectif de pallier les inconvénients de l'état de la technique.

En particulier, un but de l'invention est de réaliser un projecteur (de type projecteur frontal ou rétroprojecteur) et un module de projection ou un moteur optique encore moins encombrants que dans les systèmes connus.

L'invention a également pour objectif de réduire à la fois la profondeur et la hauteur du projecteur en fonction de la taille de l'image projetée.

Un autre objectif de l'invention est de corriger les distorsions que pourrait induire le système optique.

Notamment, l'objet de l'invention est d'utiliser un miroir courbe de type asphérique ou hyperbolique (par exemple) dans cet objectif. On connaît un système, tel que décrit dans le brevet US 5716118, utilisant un miroir hyperbolique, mais le système doit être de grandes dimensions pour obtenir une image de grandes dimensions. Un tel système est donc difficilement viable industriellement en raison des difficultés à réaliser un tel miroir de grandes dimensions.

L'invention concerne un module de projection pour projecteur frontal ou pour rétroprojecteur viable industriellement et permettant d'obtenir des images projetées de grandes dimensions et de bonne qualité, comme définit dans la rev. indépendante 1.

Les surfaces de renvoi sont réfléchissantes ou semi-réfléchissante et sont, par exemple, des miroirs ou des prismes, et permettent de renvoyer un faisceau lumineux incident dans une autre direction.

Préférentiellement, le miroir courbe est hyperbolique.

Le miroir courbe comprend au moins une partie concave ou convexe et est, avantageusement, concave ou convexe.

Selon une variante de l'invention, l'angle entre l'axe de l'objectif et le plan de projection est inférieur ou égal à 10°.

Selon un mode de réalisation préférentiel, l'image projetée étant rectangulaire, l'angle entre l'axe de l'objectif et le grand coté de l'image projetée sur l'écran est inférieur ou égal à 10°.

Selon un autre mode de réalisation préférentiel, l'image projetée étant rectangulaire, l'angle entre l'axe de l'objectif et le petit coté de l'image projetée sur l'écran est inférieur ou égal à 25°.

Avantageusement, au moins une des surfaces de renvoi est adaptée à rediriger le faisceau d'imagerie, issu de l'objectif vers le miroir courbe dans un plan perpendiculaire au plan de projection.

Selon une caractéristique particulière, le module est remarquable en ce qu'au moins une des surfaces de renvoi fait un angle compris entre 40° et 50° avec un plan normal au plan de projection.

Préférentiellement, les surfaces de renvoi sont planes.

Selon une caractéristique avantageuse, le module comprend au moins un cache associé à au moins une des surfaces de renvoi et adapté à empêcher la propagation de rayons parasites.

## 4. Liste des figures.

L'invention sera mieux comprise, et d'autres particularités et avantages apparaîtront à la lecture de la description qui va suivre, la description faisant référence aux dessins annexés parmi lesquels :

- les figures 1 à 3 illustrent différents modes de réalisation de rétroprojecteurs de l'état de l'art ;
- la figure 4 présente un rétroprojecteur selon un premier mode particulier de réalisation de l'invention ;
- la figure 5 illustre, selon une vue en perspective, des éléments optiques du rétroprojecteur présenté en regard de la figure 4 ;
- les figures 6 et 7 présentent des vues respectivement de coté et de face du rétroprojecteur de la figure 4 ;
- la figure 8 décrit un second mode de réalisation de l'invention ;
- les figures 9 à 11 illustrent un troisième mode de réalisation de invention ;
- la figure 12 présente un projecteur frontal selon un mode de réalisation de l'invention ; et
- les figures 13 et 14 illustre un moteur optique utilisé dans le rétroprojecteur de la figure 4 ;
- la figure 15 présente un moteur optique utilisé dans le rétroprojecteur des figures 9 à 11 ;
- la figure 16 est un synoptique très schématique d'un rétro-projecteur selon une variante de réalisation de l'invention ;
- la figure 17 présente les différentes images formées par le rétro-projecteur de la figure 16 ;
- la figure 18 illustre les propriétés optiques du rétro-projecteur de la figure 16 ; et
- la figure 19 présente un objectif mis en oeuvre dans le projecteur de la figure 16.

## 5. Description détaillée de l'invention.

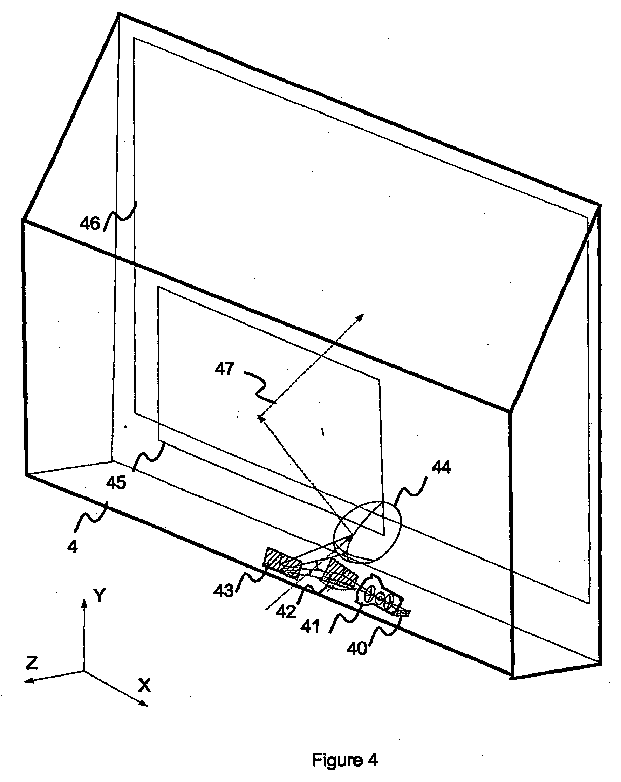

La **figure 4** présente schématiquement une perspective d'un rétroprojecteur 4 selon un premier mode particulier de réalisation de l'invention.

Le rétroprojecteur 4 comprend :

- un écran plat 46, de projection définissant un axe horizontal x, un axe vertical y, tous deux parallèles à l'écran 46, et un axe z normal à l'écran 46;
- des moyens d'illumination (non représentés en figure 4) générant un faisceau d'illumination ;
- un imageur 40 créant un faisceau d'imagerie à partir du faisceau d'illumination; et
- un module de projection.

L'imageur est, par exemple, un DMD (« Appareil à Micromiroirs Numériques » de l'anglais « Digital Micromirrors Device » de la société Texas Instruments ®), un LCD transmissif (Afficheur à cristaux liquides, de l'anglais « Liquid Crystal Display ») ou un LCOS (Cristal liquide sur du silicium de l'anglais « Liquid Crystal On Silicon »).

Le module de projection du projecteur 4 comprend lui-même :

- un système optique 41 ou objectif placé en face de imageur 40 et dont l'axe optique est sensiblement parallèle à la direction $x$ ;
- un premier miroir de renvoi 42 recevant un faisceau d'imagerie 47 émis par le système optique 41 et permettant de renvoyer le centre du faisceau 47 dans un plan normal à l'écran 46 et défini par les axes $yz$ ;
- un second miroir de renvoi 43 recevant le faisceau 47 renvoyé par le miroir 42 et positionné de sorte que le faisceau soit réfléchi vers un miroir hyperbolique 44 ;
- le miroir hyperbolique 44 adapté à élargir le faisceau 47 et à le transmettre vers un troisième miroir de renvoi 45 ; et
- le miroir de renvoi 45 parallèle à l'écran 46 et transmettant le faisceau 47 reçu du miroir hyperbolique vers l'écran 46.

Le miroir 44 étant hyperbolique, la configuration du module de projection est optimisée pour l'obtention d'une grande image projetée avec un grand angle tout en ayant des aberrations optiques réduites. Ainsi, la combinaison du système optique 41 et du miroir hyperbolique 44 permet d'obtenir un objectif grand angulaire.

**EP 1 745 329 B1**

L'imageur 40, le système optique 41 et les miroirs 42 à 44 sont placés dans la partie basse du rétroprojecteur 4 de sorte à ne pas gêner la propagation du faisceau d'imagerie 47. La distance entre le miroir convexe 44 et l'objectif 41 est suffisamment grande pour que le faisceau d'imagerie puisse être replié grâce aux miroirs 42 et 43 dans un espace réduit et le faisceau 47 est peu divergent dans la zone située avant le miroir convexe.

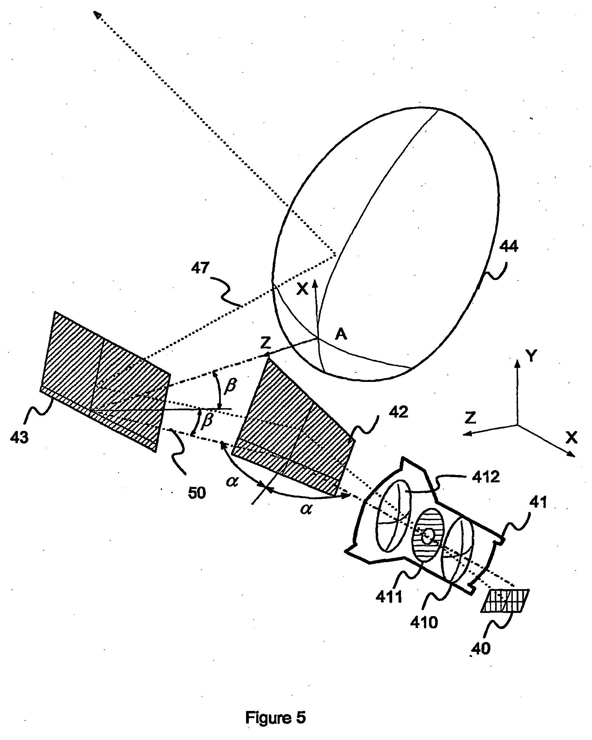

La **figure 5** présente plus en détails les éléments optiques 40 à 45 ainsi que leur agencement.

L'objectif 41 comporte successivement suivant son axe optique :

- une première lentille complexe 410, c'est-à-dire constituée d'un ensemble de lentilles ;
- une pupille 411 permettant d'éviter les rayons parasites ; et
- une seconde lentille complexe 412.

Le miroir 44 ayant une forme hyperbolique est disposé du côté de la sortie de l'objectif et est disposé de telle façon que l'axe de l'hyperbole passant par les foyers de l'hyperbole coïncide avec faxe optique XX' de la lentille 410.

La lumière émise par la lentille est réfléchie par les miroirs plans 42 et 43 puis par le miroir hyperbolique 44 et semble provenir d'un point qui est un point conjugué de la pupille 411 de l'objectif 41. L'axe du faisceau étant parallèle à l'écran 46 selon le mode de réalisation décrit, le miroir 42 est orienté de sorte que la normale à sa surface fait un angle a égal à 45° avec l'axe optique du faisceau incident Bien entendu, selon différents modes de réalisation de l'invention, l'angle $\alpha$ peut prendre d'autres valeurs lorsque notamment le faisceau incident n'est pas parallèle à l'écran 46. Par ailleurs, le miroir 43 est orienté de sorte que le faisceau incident soit renvoyé correctement vers le miroir hyperbolique 44. Ainsi, tout en étant parallèle à l'axe $x$, le miroir 43 est tel que la normale à sa surface fait un angle $\beta$ avec l'axe optique du faisceau incident 47.

Comme on peut le voir sur la figure 5, le miroir hyperbolique 44 permet de rendre plus divergent le faisceau 47 qu'il réfléchit. De plus, pour éviter que la lentille 410 perturbe la transmission du faisceau réfléchi par le miroir hyperbolique, on n'utilise préférentiellement que la partie de la forme hyperbolique située d'un côté d'un plan passant par l'axe de symétrie de l'hyperbole. Cet axe passe par les foyers de l'hyperbole. La lumière utilisable issue du système 41 est donc celle située au dessus d'un plan passant par l'axe optique de l'objectif. Une image éclairée par une source lumineuse et que l'on se propose de projeter sur l'écran sera donc décentrée par rapport à l'axe de l'objectif 41.

Selon une variante de l'invention, tous les points du champ de la pupille d'entrée sont situés à l'infini et le système est télécentrique.

Une telle disposition peut dans certain cas induire des distorsions et de la détérioration de la MTF (de l'anglais « Modulation Transfert Fonction » ou « fonction de transfert de modulation en français) c'est-à-dire une détérioration de la réponse en fréquence spatiale du système optique. On prévoit de corriger ces défauts en éloignant le miroir hyperbolique 44 de l'objectif et en interposant une lentille entre la pupille 411 et le miroir hyperbolique 44 qui permet d'équilibrer les puissances optiques de part et d'autre du diaphragme de ladite lentille et de réduire l'angle d'incidence des rayons du faisceau sur le miroir hyperbolique 44 et notamment pour réduire l'incidence des rayons les plus écartés de l'axe de l'hyperbole. Ainsi, plus le miroir hyperbolique est écarté de l'objectif 41, plus celui-ci fonctionne sur un champ réduit. Afin d'obtenir une grande distance optique entre le miroir hyperbolique 44 et le système 41 tout en ayant un encombrement réduit du rétroprojecteur 4, les miroirs 42 et 43 replient le faisceau 47 émis par le système 41.

L'invention prévoit également de corriger l'astigmatisme qui pourrait être induit par le miroir hyperbolique 44. Pour cela il est prévu une ou deux lames en forme de ménisques non représentés sur la figure 5 et disposées à proximité de la pupille 411 de l'objectif 41. Dans le cas de deux ménisques, on prévoit de les placer de part et d'autre de la pupille 411. Les ménisques sont disposés avec leurs faces concaves se faisant face et les centres des ménisques sont situés également de part et d'autre de la pupille 411 de telle façon que la distance entre les deux faces concaves soient inférieure à la somme des rayons des deux faces concaves.

Un imageur 40 de type dispositif d'affichage SML tel qu'un modulateur spatial de lumière permet de transmettre un faisceau qui véhicule au moins une image en raison de la modulation spatiale. Ce faisceau est transmis par le système 41 au miroir plan 42, puis au miroir plan 43 et enfin au miroir hyperbolique 44 qui réfléchit la lumière vers le miroir plan 45. Le miroir plan 45 est situé de préférence parallèlement au plan de l'écran 46 sur la face arrière du rétroprojecteur 4.

L'afficheur SML 40 est situé d'un côté d'un plan passant par l'axe optique XX' du système 41 de façon à n'éclairer que le miroir hyperbolique 44 qui n'occupe qu'une partie de l'hyperbole située d'un côté d'un plan passant par l'axe de celle-ci. Ainsi, la partie basse du miroir 44 qui ne reçoit pas de faisceau utile est préférentiellement tronquée.

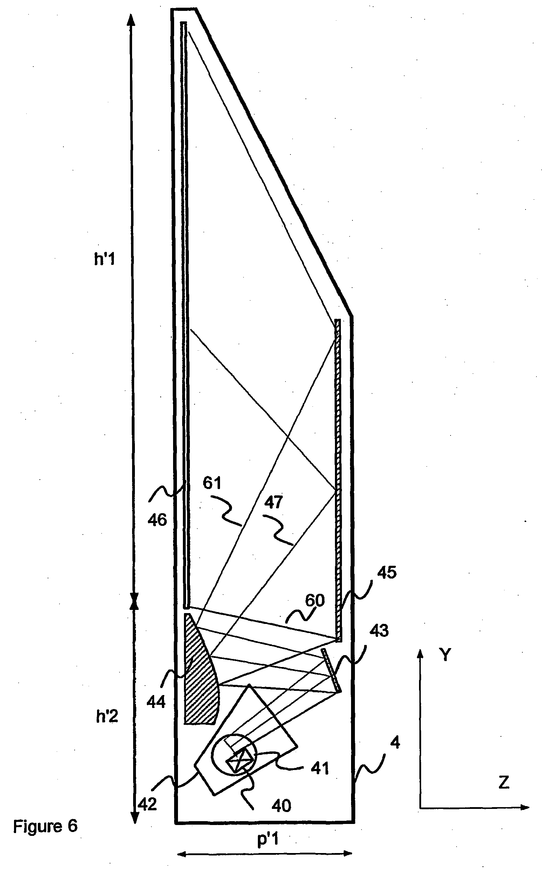

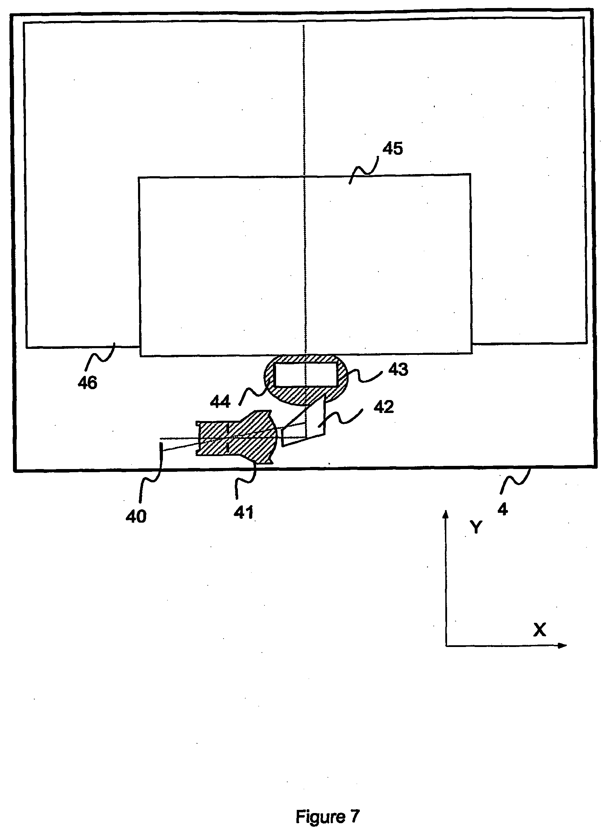

Les **figures 6 et 7** représentent respectivement schématiquement une vue de coté suivant la direction x et une vue de face suivant la direction $z$.

Comme indiqué sur ces figures, l'axe optique du système optique 41 est sensiblement horizontal et parallèle à l'écran 46. Ainsi, il n'influe pas sur la profondeur $p'1$ du rétroprojecteur 4 tout en conservant une hauteur $h'2$ sous l'écran 46 faible. A titre illustratif, $p'1$ est de l'ordre de 160 mm et $h'2$ est voisin de 320 mm pour un écran dont la hauteur $h'1$ est égale à 620 mm

Selon le mode de réalisation décrit, les paramètres du projecteur 4 sont les suivants :

- a et β valent respectivement 45° et 21 ;
- la distance entre l'objectif 41 et le miroir 42 est égale à 53 mm ;
- la distance entre les miroirs 42 et 43 vaut 86 mm ;
- la distance entre les miroirs 43 et 44 est égale à 94 mm ;
- le miroir 42 est un trapèze ayant pour dimension 103 mm (deux cotés opposés non parallèles) x 55 mm x 68 mm (cotés opposés parallèles) ; et
- le miroir 43 est un rectangle de 100 mm x 70 mm.

Plus généralement, selon différentes variantes de réalisation de l'invention, l'axe optique du système optique 41 est sensiblement horizontal et fait un angle $\gamma$ avec l'écran 46. L'angle entre l'axe optique du système 41 et le grand coté de l'écran 46 est inférieur à 15°. Préférentiellement, cet angle est inférieur à 10°. Ainsi, on peut réduire sensiblement la profondeur du module. De manière encore plus préférentielle, il est nul ou quasiment nul, ce qui permet de réduire encore plus l'encombrement (hauteur et profondeur) du module de projection et donc du projecteur 4.

De cette manière, la hauteur du module est réduite. Un tel module convient notamment au cas d'un projecteur monobloc (rétroprojecteur par exemple) où le module est logé sous ou sur un écran avec une image au format de type télévision ou cinéma (le grand coté est horizontal), ou au cas d'un dispositif de projection séparé de l'écran, le miroir convexe imposant une plus grande dimension dans une direction parallèle à l'écran de projection.

En outre, la plupart des rayons parasites issus de l'objectif sont alors généralement sensiblement parallèles à l'écran de projection et ne sont pas réfléchis par le miroir convexe. Ils sont donc éliminés d'une façon très simple.

Le miroir 42 est incliné par rapport au plan *yz* d'un angle de 45° pour renvoyer le rayon centre du faisceau 47 émis dans le plan *yz* normal à l'écran 46 ce qui permet une mise en oeuvre relativement simple du module de projection. Le miroir 42 est également incliné par rapport au plan *yx* d'un angle $\alpha$ égal à 22,5°. Selon différentes variantes exposées ci-dessus, dans une mise en oeuvre de l'invention où l'angle $\gamma$ entre l'axe optique du système optique avec l'écran 46 n'est pas nul, le miroir 42 est incliné par rapport au plan *yz* d'un angle égal à $45° \pm \dfrac{\gamma}{2}$. Préférentiellement, cet angle est compris entre 40° et 50° puisque $\gamma$ est préférentiellement inférieur à 10°.

La figure 6 montre également l'enveloppe du faisceau émis dans un plan vertical centré par rapport au rétro-projecteur 4. Plus précisément, l'enveloppe du faisceau émis est limitée dans sa partie haute par un rayon 61 et dans sa partie basse par un rayon 60.

Afin de réduire la hauteur *h'2,* le miroir 42 est positionné préférentiellement le plus haut possible. Ainsi, le faisceau réfléchi par le miroir 43 (le rayon 60 notamment) frôle le miroir 42 sans que ce dernier lui fasse obstacle.

Afin de gêner le moins possible la propagation du faisceau optique et de réduire la hauteur *h'2,* le miroir 42 a la forme d'un trapèze qui correspond à l'empreinte exacte du faisceau émis par le système optique 41 dans son plan de réflexion.

Le miroir 43 est parallèle à l'axe x et renvoie le faisceau réfléchi par le miroir 42 vers le miroir hyperbolique 44. Il est incliné avec un angle de 22,5° par rapport à l'axe vertical *y.* Il est positionné pour être le plus proche possible de la face arrière du rétroprojecteur 4 tout en ne faisant pas obstacle au faisceau réfléchi par le miroir 44.

Ainsi, dans une configuration de module optique avec deux miroirs 42 et 43 placés entre l'objectif 41 et le miroir hyperbolique 44, les deux miroirs de renvoi 42 et 43 ont une double fonction puisqu'ils permettent notamment, d'une part, une redirection du faisceau optique d'imagerie dans un plan normal à l'écran de projection et, d'autre part, un allongement des distances optiques entre l'objectif 41 et le miroir convexe 44 ; cette double fonction permet notamment de plier plus facilement le faisceau d'imagerie dans un espace réduit

Comme indiqué précédemment, le miroir hyperbolique 44 renvoie le faisceau vers le miroir 45 en permettant d'agrandir l'image.

L'équation de la surface du miroir hyperbolique 44 est la suivante :

$$z = \frac{cr^2}{1 + \sqrt{1 - (1+k)c^2 r^2}} \tag{1}$$

dans laquelle

- *c* représente la courbure du miroir (*c*=1/Rc où *Rc* est le rayon de courbure) ;
- *k* est la constante de conicité; et
- *r* est la coordonnée radiale.

A titre illustratif, selon le mode de réalisation décrit, le rayon *Rc* vaut 57,7 mm, la constante *k* est égale à 3,77. La forme extérieure de l'hyperbole est une ellipse (de taille 90 mm x 136 mm) excentrée à 56 mm de l'axe de l'hyperbole.

D'une manière générale, le miroir 44 est convexe; Ainsi, selon une variante de réalisation, le miroir 44 est remplacé par un miroir asphérique adapté à renvoyer une image agrandie vers le miroir 45. L'équation de la surface du miroir asphérique est la suivante :

$$z = \frac{cr^2}{1+\sqrt{1-(1+k)c^2r^2}} + \sum_{i=1}^{N}\alpha_i r^i \qquad (2)$$

où un terme asphérique apparaît dans lequel :

- *i* est le rang du terme utilisé
- $\alpha_i$ représente le coefficient asphérique pour le terme de rang *i*.

A titre illustratif, $\alpha 3$ vaut $-1,09.10^{-6}$ et les autres coefficients $\alpha_i$ sont nuls.

Selon une autre variante de l'invention (pouvant être combinée avec d'autres variantes de rétroprojecteur, décrites), le miroir situé entre le miroir asphérique ou hyperbolique et l'écran est remplacé par un miroir incliné par rapport à l'écran et/ou par plusieurs miroirs de renvoi assurant un repli du faisceau.

Selon encore une autre variante de l'invention, il n'y a pas de miroir entre le miroir convexe (par exemple asphérique ou hyperbolique) et l'écran. La partie réfractive de l'objectif comporte un groupe de lentilles arrière GrAR composé de quatre lentilles et d'un groupe de lentilles avant GrAV composé de trois lentilles (dont un ménisque). Le groupe avant reçoit la lumière de l'objet SML dont on doit projeter l'image sur l'écran. Le groupe avant GrAV permet d'éclairer le miroir convexe (hyperbolique selon l'exemple illustré) à l'aide du faisceau qu'il reçoit du groupe arrière GrAR. Le miroir hyperbolique est situé par rapport au groupe de lentilles GrAV de telle façon que l'un de ses foyers F1 est situé dans le plan de la pupille de sortie du groupe avant GrAV. L'autre foyer virtuel F2 est situé dans le plan de la pupille de sortie virtuelle du système. Le miroir hyperbolique conjugue les pupilles et présente l'avantage d'augmenter l'angle de champ et donc d'augmenter le grandissement du système. De plus, une lentille positive située entre le ménisque du groupe GraV et le miroir hyperbolique est prévue pour réduire l'enveloppe des rayons lumineux du champ de manière à faciliter le repliement du faisceau lumineux à l'aide d'un miroir plan pour réduire l'encombrement de l'objectif.

Cependant, le miroir hyperbolique peut introduire une distorsion géométrique. Pour corriger cette distorsion, le groupe arrière de lentilles GrAR comporte une lentille ayant une surface en forme de conique. Avantageusement, cette conique est une conique du même type que la forme du miroir convexe de façon à fournir une correction quasiment parfaite de la distorsion géométrique. Avantageusement, cette conique est donc une hyperbole. De préférence, le rapport des coniques (miroir hyperbolique et lentille arrière) est sensiblement proportionnel au rapport des positions des foyers des hyperboles. Par exemple, on se fixe la focale de la lentille équivalente arrière GrAR, on place la pupille à la focale de cette lentille, on place l'hyperbole à "une certaine distance. Cette distance contraint d'utiliser une focale et une conique pour l'hyperbole pour obtenir sur l'écran le grandissement donné (par exemple 64). La forme de la surface conique qu'il faut donner à la lentille ou au groupe de lentilles GrAR pour corriger l'objectif est telle que le rapport de cette conique à la conique du miroir hyperbolique est sensiblement proportionnel au rapport des distances des foyers de l'hyperbole aux plans principaux de l'hyperbole. Ces distances sont les distances équivalentes vue de l'hyperbole correspondante à travers les lentilles du groupe GrAV.

Cependant, la lentilles de forme hyperbolique doit être éloignée du diaphragme de l'objectif, de façon à ce que la pré-correction des distorsions puisse se faire sur un faisceau étendu.

En outre, la lentille ainsi conçue permet de corriger non seulement les distorsions géométriques, mais aussi la courbure de champ.

Par ailleurs, les défauts d'astigmatisme induits par le système ne suivent pas les mêmes lois que les distorsions géométriques. Elles ne sont pas corrigées par les moyens précédents. C'est pourquoi on prévoit au moins un ménisque permettant de corriger les défauts d'astigmatisme induits par le système.

Selon une variante de réalisation du projecteur 4, les miroirs 42 et 43 peuvent être remplacés par un prisme complexe. La réflexion peut être totale pour la surface équivalente au miroir 42. En revanche, la surface équivalente au miroir 43 doit être métallisée car les angles du faisceau incident est faible par rapport à la normale de cette surface.

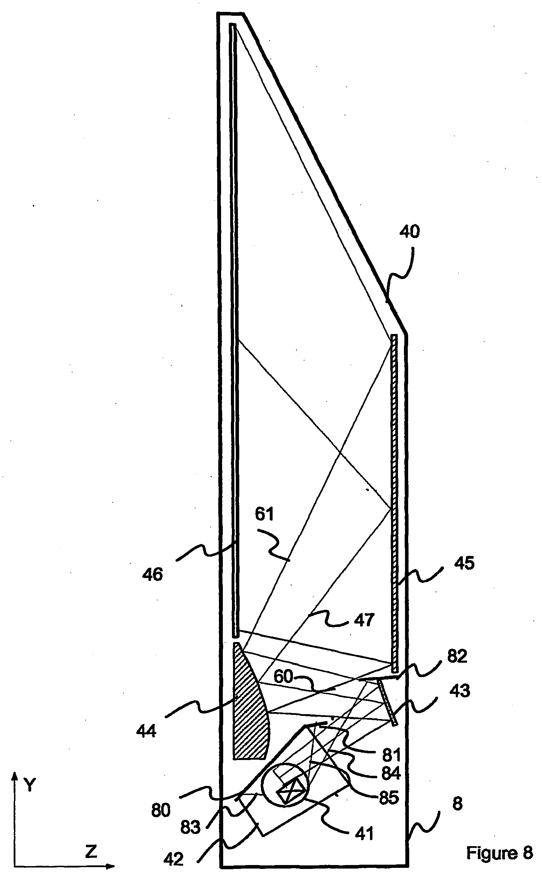

La **figure 8** présente un second mode de réalisation d'un rétro-projecteur 8 selon l'invention, particulièrement bien adapté pour éviter le vignettage ou éliminer des rayons optiques parasites.

Le rétroprojecteur 8 comprend les mêmes éléments que le rétroprojecteur 6 illustré précédemment. Ces éléments communs portent les mêmes références et ne sont donc pas décrits davantage.

Le rétroprojecteur 8 comprend, en outre, des caches 80 à 82 parallèles à l'axe *x*, associés chacun à au moins un des miroirs 42 et 43 et positionnés pour arrêter les rayons parasites issus du système 41 (directement ou après réflexion sur l'un des miroirs, notamment sur le miroir 42).

Le cache 80 est tangent au miroir 42 sur le coté le plus proche du miroir hyperbolique 44. Ainsi, il bloque des rayons parasites 83, dirigés vers le miroir hyperbolique 44 ou l'écran 46.

Le cache 81 est accolé au cache 80 tout en étant sensiblement horizontal de sorte à ne pas faire obstacle au faisceau optique réfléchi respectivement par les miroirs 42 et 43. Ainsi, il bloque des rayons parasites 85, dirigés vers le haut du rétroprojecteur 8 et notamment vers l'écran 46.

Le cache 82 est tangent au miroir 43 sur le coté supérieur proche du miroir plan 45 tout en étant positionné et dimension de sorte à ne pas faire obstacle au faisceau optique réfléchi respectivement par les miroirs 43 et 44. Ainsi, il bloque des rayons parasites 84, dirigés vers le miroir 45.

Les caches 80 à 82 ont préférentiellement une grande dimension suivant la direction *x* qui n'est limitée que par la largeur du projecteur 8. Suivant les direction dans le plan *yz*, les caches sont positionnés de sorte à ne pas gêner la propagation du faisceau d'imagerie.

Selon une variante de réalisation, les caches sont regroupés en une seule surface qui sépare complètement de l'objectif et les moyens d'illumination des miroirs 42 à 45. Seule une ouverture rectangulaire ou trapézoïdale (en fonction de l'angle d'inclinaison du faisceau d'imagerie par rapport à la surface) pratiquée dans la surface formant cache est pratiquée de façon à laisser passer le faisceau d'imagerie par l'ouverture tout en empêchant le passage des faisceaux parasites en dehors de l'ouverture.

Par ailleurs, on note que la plupart des rayons parasites sont éliminés très simplement dans une configuration où l'axe optique du système optique 41 est sensiblement horizontal suivant un axe sensiblement parallèle aux miroirs 44 et 45 ainsi qu'à l'écran 46 (rétroprojecteurs 6 et 8). En effet, dans une telle configuration, la plupart des rayons parasites sont sensiblement horizontaux et dirigés vers un coté du rétroprojecteur. Ainsi, la plupart de ces rayons parasites qui ne rencontrent pas le premier miroir de renvoi 42 ne sont pas dirigés vers un miroir ou l'écran, mais vers d'autres éléments internes du rétroprojecteur qui sont préférentiellement non réfléchissants.

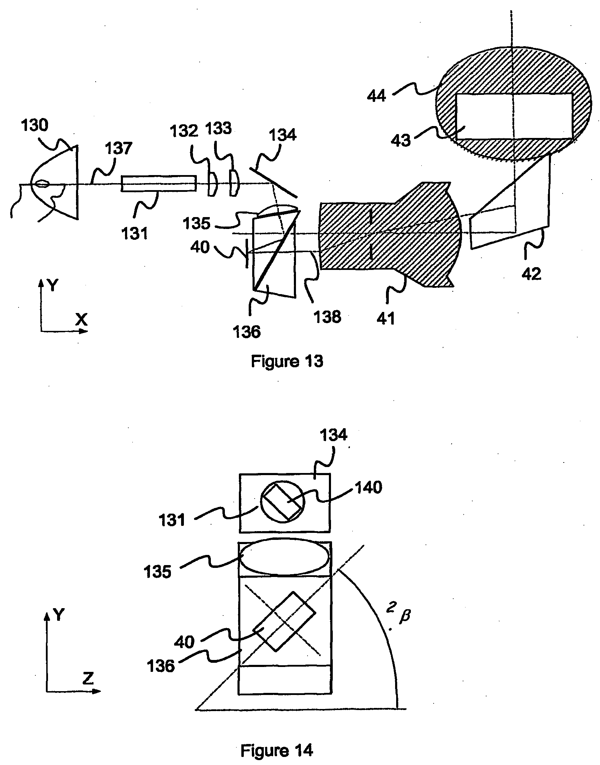

La **figure 13** présente un moteur optique équipant le rétroprojecteur 4. Le moteur optique comprend :

- une lampe 130 et son réflecteur ;
- un guide 16/9ème 131 (correspondant à l'écran 16/9ème 46) ;
- des lentilles 132 et 133 ;
- un miroir de renvoi 134 plan ;
- une lentille 135 ;
- un prisme 136 ;
- l'imageur 40 ;
- l'objectif 41 ; et
- les miroirs 42 à 44.

La lampe 130 et son réflecteur émettent un faisceau d'illumination 137 qui est concentré à l'entrée du guide 131. A la sortie du guide 131, les lentilles 132 et 133 transmettent le faisceau 137 qui frappe le miroir 134. Le miroir 134 est incliné par rapport à l'axe optique du faisceau incident de sorte à renvoyer le faisceau 137 vers la lentille 135 qui est accolée au prisme 136. L'axe optique de la lampe 130, du guide 131 et des lentilles 132 et 133 est sensiblement parallèle au plan de projection associé à l'écran 46. Ainsi, la profondeur du rétroprojecteur 4 est réduite.

Le faisceau 137 pénètre alors dans le prisme 136 via la lentille 135 avant d'être réfléchi par une face opposée du prisme 136 vers l'imageur 40. La position des différents éléments du moteur optique et les distances focales des lentilles sont telles que la sortie du guide 131 est imagée sur imageur 40.

Après réflexion sur l'imageur 40, le faisceau 137 forme donc un faisceau représentatif d'une image 138 qui est renvoyé vers le prisme 136 avant de pénétrer dans le système optique 41 et d'être réfléchi par les miroirs 42, 43 et 44 comme indiqué précédemment.

Le faisceau optique 137 émis par la lampe 130 est orienté de la même façon que le faisceau optique issu de l'imageur 40. De cette façon, les éléments 130 à 133 sont placés dans un demi-espace situé à l'arrière de l'imageur 40. Par ailleurs, la partie du faisceau d'illumination 137 située avant le miroir de renvoi 134 est sensiblement parallèle au faisceau d'imagerie issu de l'objectif 41. Préférentiellement, l'angle entre ces deux faisceaux est inférieur à 10°. Préférentiellement, également, l'angle entre le plan de projection (défini par l'écran 46) et la partie du faisceau d'illumination 137 située avant le miroir de renvoi 134 est également inférieur à 10°. Les éléments 130 à 135 du système d'illumination, l'imageur 40, l'objectif 41 et les miroirs 42 à 44 peuvent donc occuper un espace parallélépipédique de hauteur et de profondeur réduites (suivant respectivement les axes *y* et *z*) et une longueur qui n'excède pas la largeur de l'écran 46.

La **figure 14** illustre une vue de face du moteur optique (à l'exception de la lampe 130 non représentée) présenté en regard de la figure 13 et mettant en évidence le positionnement des différents éléments.

La normale du miroir 43 faisant un angle β avec l'axe optique du faisceau incident 47, le grand axe de l'imageur 40 fait un angle égal à 2β avec la direction z (normale à l'écran 46). De même, le grand coté de la sortie du guide 16/9ème 131 fait également un angle égal à 2β avec la direction z (néanmoins le grand coté de la sortie du guide et le grand axe de imageur sont orientés d'une manière opposée).

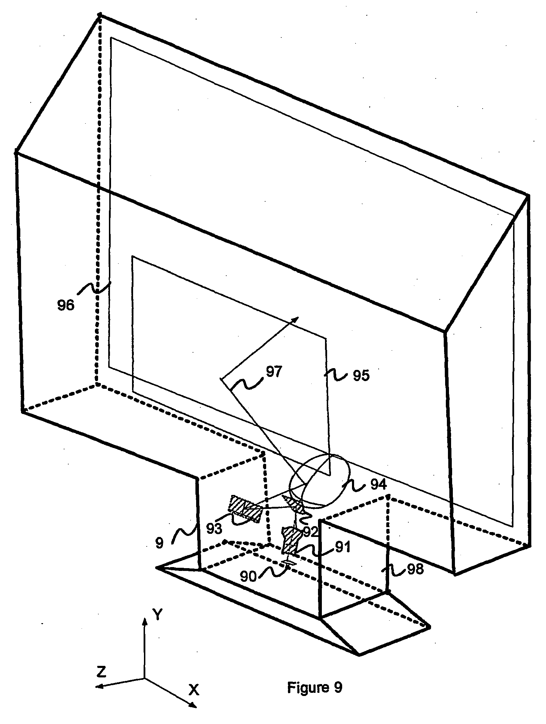

Les **figures 9 à 11** illustrent un troisième mode de réalisation d'un rétroprojecteur 9 selon l'invention, particulièrement bien adapté à une configuration avec un socle 98.

Le rétroprojecteur 9, comprend :

- un écran plat 96, de projection définissant un axe horizontal x, un axe vertical y, tous deux parallèles à l'écran 96, et un axe z normal à l'écran 96;
- des moyens d'illumination (non représentés en figure 9) générant un faisceau d'illumination; et
- un imageur 90 créant un faisceau d'imagerie à partir du faisceau d'illumination; et
- un module de projection.

Le module de projection du projecteur 9 comprend lui-même :

- un système optique 91 ou objectif placé en face de imageur 90 dont l'axe optique est sensiblement parallèle à la direction y (axe optique sensiblement vertical) ;
- un premier miroir de renvoi 92 recevant un faisceau 97 d'imagerie émis par le système optique 91 et permettant de renvoyer le centre du faisceau 97 dans un plan peu incliné par rapport au plan horizontal xz;
- un second miroir de renvoi 93 recevant le faisceau 97 renvoyé par le miroir 92 et positionné de sorte que le faisceau soit réfléchi vers un miroir hyperbolique 94 ;
- le miroir hyperbolique 94 (similaire au miroir 44 décrit précédemment) adapté à élargir le faisceau 97 et à le transmettre vers un troisième miroir de renvoi 95 ; et
- le miroir de renvoi 95 (similaire au miroir 45 Illustré précédemment) parallèle à l'écran 46 et transmettant le faisceau 97 reçu du miroir hyperbolique vers l'écran 96.

A titre illustratif, les miroirs 92 et 93 font un angle égal respectivement à 52° et 18°. Ainsi, l'objectif 91 fait un angle de 22° par rapport à l'écran ((90° + 2x18) - 2x52°= 22°).

Ainsi, comme indiqué sur la vue en perspective de la figure 9, les éléments optiques 90 à 94 sont dans le socle 98 qui peut être relativement étroit (tout en maintenant une bonne tenue mécanique de l'ensemble), seule la base du socle 98 étant élargie pour assurer une bonne assise de l'ensemble. La largeur du socle, p'3, est par exemple égale à 250 mm et sa profondeur de 160 mm pour un écran de dimension 1106 mm x 620 mm. Ainsi, il est possible de loger à la fois les éléments optique 90 à 94, la lampe et le système d'illumination de l'imageur. Ainsi, le module de projection est particulièrement bien adapté à un rétroprojecteur avec un socle, ou dans une configuration de projecteur frontal qui se déplie pour une image de type télévision ou cinéma avec un coté vertical plus petit que le coté horizontal.

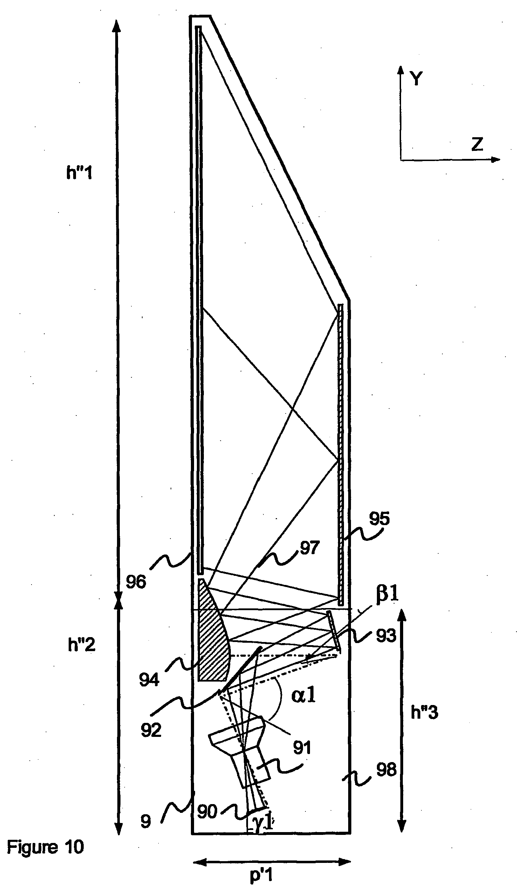

La figure 10 (respectivement 11) présente schématiquement une vue de coté (respectivement de face) du rétroprojecteur 9, suivant l'axe x (respectivement z).

L'axe optique du système 91 est sensiblement dans le plan yz et fait un angle γ1 avec l'axe vertical y. L'angle γ1 selon l'exemple illustré est égal à 22°. Selon une variante de réalisation, il est compris entre 20° et 24° avec les ouvertures choisies (qui correspondent à des incidences supérieures à 55°), ce qui permet de ne pas trop augmenter la surface du miroir 92 tout en évitant du vignetage.

Plus généralement, l'angle γ1 est compris entre 20 et 24°, ce qui permet déjà une réduction de la profondeur du rétroprojecteur par rapport à l'état de l'art. Préférentiellement, il est inférieur à 10° pour réduire encore plus fortement la profondeur du rétroprojecteur.

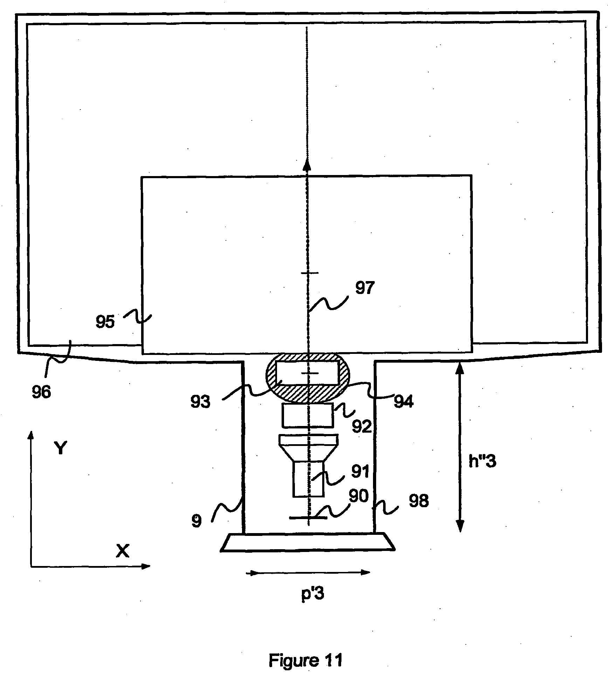

La figure 11 illustre schématiquement le rétroprojecteur 9 en vue de face suivant l'axe z.

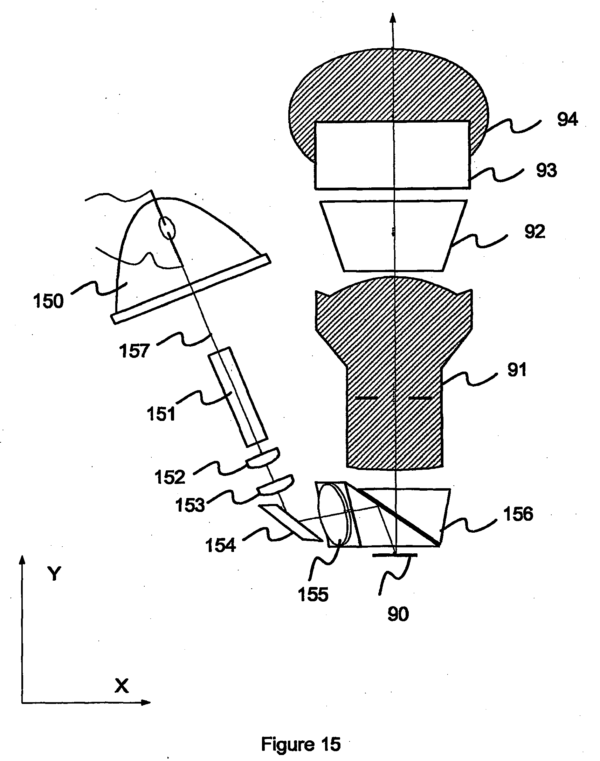

La **figure 15** présente un moteur optique équipant le rétroprojecteur 9. Le moteur optique comprend :

- une lampe 150 et son réflecteur associé;
- un guide 16/9ème 151 (correspondant à l'écran 16/9ème 96) ;
- des lentilles 152 et 153 ;
- un miroir de renvoi 154 plan ;
- une lentille 155 ;
- un prisme 156 ;
- l'imageur 90 ;
- l'objectif 91 ; et
- les miroirs 92 à 94.

La lampe 150 et son réflecteur émettent un faisceau d'illumination 157 qui est concentré à l'entrée du guide 151. A la sortie du guide 151, les lentilles 152 et 153 transmettent le faisceau 157 qui frappe le miroir 154. Le miroir 154 est incliné par rapport à l'axe optique du faisceau incident de sorte à renvoyer le faisceau 137 vers la lentille 155 qui est accolée au prisme 156. L'axe optique de la lampe 190, du guide 141 et des lentilles 142 et 143 est légèrement incliné par rapport au plan de projection associé à l'écran 46. Ainsi, la profondeur du rétroprojecteur 9 est réduite.

Le faisceau 157 pénètre alors dans le prisme 156 via la lentille. 155 avant d'être réfléchi par une face opposée du prisme 156 vers l'imageur 90. La position des différents éléments du moteur optique et les distances focales des lentilles sont telles que la sortie du guide 151 est imagée sur l'imageur 90.

Après réflexion sur l'imageur 90, le faisceau 157 forme donc un faisceau représentatif d'une image 158 qui est renvoyé vers le prisme 156 avant de pénétrer dans le système optique 91 et d'être réfléchi par les miroirs 92, 93 et 94 comme indiqué précédemment.

Le faisceau optique 157 émis par la lampe 190 est orienté dans un sens inverse à celui du faisceau optique issu de l'imageur 90. De cette façon, les éléments 150 à 155 sont placés dans un demi-espace situé à l'avant de imageur 90. Par ailleurs, la partie du faisceau d'illumination 157 située avant le miroir de renvoi 154 est sensiblement parallèle au faisceau. d'imagerie issu de l'objectif 91. Préférentiellement, l'angle entre ces deux faisceaux est inférieur à 10°. Selon d'autres modes de réalisation de l'invention, l'angle entre le plan de projection (défini par l'écran 96) et la partie du faisceau d'illumination 147 située avant le miroir de renvoi 154 est également inférieur à 10°. Les éléments 150 à 155 du système d'illumination, imageur 90, l'objectif 91 et les miroirs 92 à 94 peuvent donc occuper un espace parallélépipédique de hauteur, de largeur et de profondeur réduite et peuvent donc loger facilement dans le socle 98.

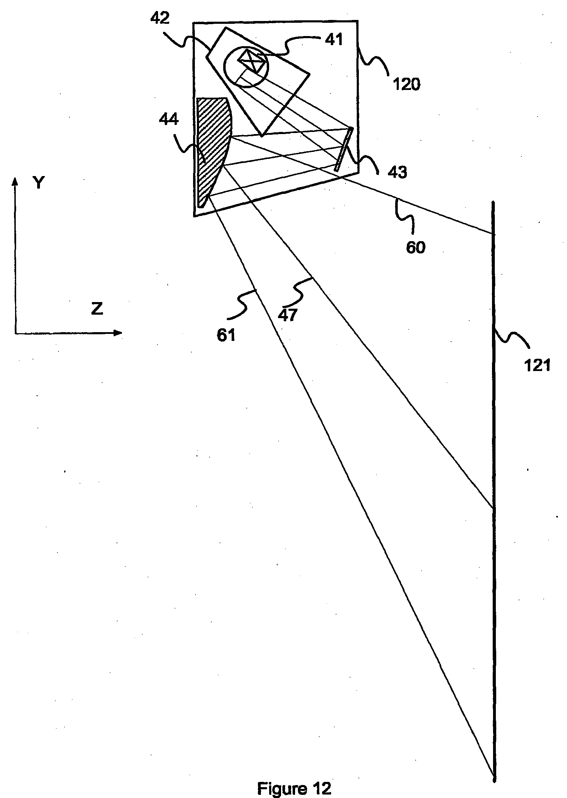

La **figure 12** présente un système de projection frontale qui comprend un écran plat 121, vertical et un appareil de projection frontal 120 positionné, par exemple, sous un plafond en face de l'écran 121, de sorte à ce qu'il projette une image sur l'écran 121. L'appareil de projection 120 est séparé de l'écran 121. Par ailleurs, contrairement à un rétroprojecteur (où l'écran est éclairé par l'arrière), l'écran 121 du système de projection est éclairé sur sa face visible.

L'écran 121 définit un axe horizontal $x$, un axe vertical $y$, tous deux parallèles à l'écran 121 et un axe $z$ normal à l'écran 121.

L'appareil de projection 120 comprend des éléments communs avec le rétroprojecteur 4 qui portent les mêmes références, notamment:

- des moyens d'illumination 130 à 136 ;
- un imageur 40 ;
- un système optique 41 placé en face de l'imageur 40 dont l'axe optique est sensiblement parallèle à la direction x ;
- un premier miroir de renvoi 42 recevant un faisceau 47 émis par le système optique 41 et permettant de renvoyer le centre du faisceau 47 dans un plan normal à l'écran 46 et défini par les axes $yz$ ;
- un second miroir de renvoi 43 recevant le faisceau 47 renvoyé par le miroir 42 et positionné de sorte que le faisceau soit réfléchi vers un miroir hyperbolique 44 ; et
- le miroir hyperbolique 44 adapté à élargir le faisceau 47 et à le transmettre vers l'écran 121.

Le miroir 45 n'est pas utile, puisqu'on peut éloigner l'appareil de projection 120 de l'écran sans, bien sûr, augmenter les dimensions de l'appareil 120 et le positionner de sorte que l'image soit projetée correctement sur l'écran 121 (le faisceau 47 n'est pas replié entre le miroir 44 et l'écran 121).

Selon des variantes de réalisation de l'invention, des caches similaires aux caches 80 à 82 illustrés en regard de la figure 8 sont ajoutés.

Selon différentes variantes, la taille et la géométrie des miroirs 42, 43 et 44 peuvent être modifiées. Le miroir 44 peut notamment être asphérique.

Selon des variantes de réalisation de l'invention, les moyens d'imagerie sont similaires aux moyens 150 à 155 illustrés en regard de la figure 15, ce qui particulièrement bien adapté à un appareil de projection frontale, qui se déplie (la position pliée correspondant, par exemple, à un mode de rangement et la position dépliée à un mode de fonctionnement).

Ainsi, le module de projection est particulièrement bien adapté à un rétroprojecteur avec un socle, ou dans une configuration de projecteur frontal qui se déplie pour une image de type télévision ou cinéma avec un coté vertical plus petit que le coté horizontal.

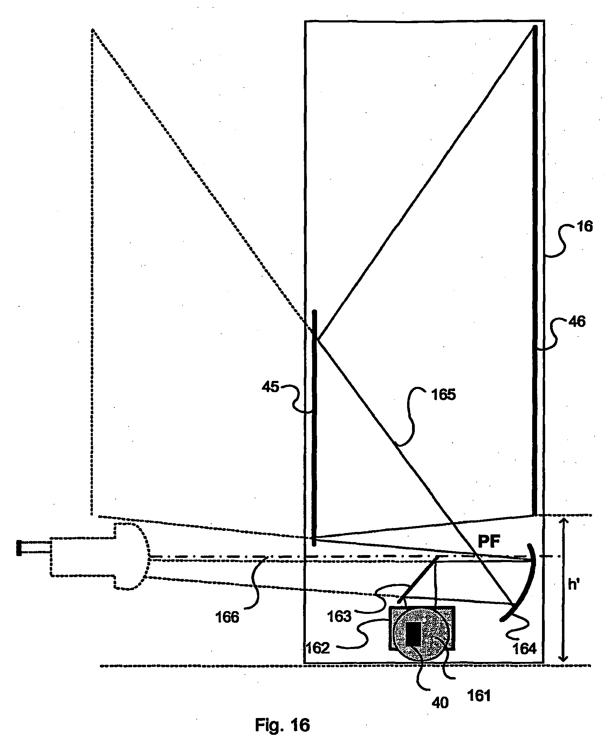

La **figure 16** illustre un rétroprojecteur 16, selon une variante de réalisation de l'invention, avec miroir asphérique concave 164, sous une forme éclatée , et qui comprend :

- une source d'imagerie ou imageur 40;
- un objectif 161 éclairé par un faisceau d'imagerie produit par la source 40;
- le miroir asphérique concave 164 qui agrandit l'image tout en repliant le faisceau ;
- deux miroirs de repli plans 162 et 163 placés entre l'objectif 161 et le miroir concave 164 ;
- un miroir de repli 45 ; et

- un écran de rétroprojection 46.

Le rétroprojecteur 16 comprend des éléments similaires aux composants du rétroprojecteur 4, qui portent les mêmes références (notamment les moyens générant un faisceau d'illumination tels qu'illustrés en regard de la figure 13 (lampe 130 et son réflecteur, guide 16/9ème 131, lentilles 132 et 133, ...), l'imageur 40, objectif 20, miroir de repli 45 et écran 46) et ne seront pas décrit davantage.

L'axe de l'objectif 161 du rétroprojecteur 16 plié est horizontal. Le faisceau d'imagerie issu de l'objectif 161 éclaire d'abord le miroir 162, incliné à 45°, par rapport à l'axe optique et perpendiculaire à l'écran 16 : le faisceau est ainsi renvoyé dans une direction parallèle à l'écran 16, son axe optique étant dans un plan normal à l'écran 16. Ensuite, le faisceau réfléchi par le miroir 162 éclaire le miroir 163, incliné à 45°, par rapport à l'axe optique et dont la normale est perpendiculaire à l'écran 16 : le faisceau est ainsi renvoyé dans une direction perpendiculaire à l'écran 16 pour éclairer le miroir concave 164. Le faisceau d'imagerie 165 non plié par les miroirs plan de repli 162, 163 et 45 a été représenté en pointillés sur la figure 16.

D'une manière générale, tous les axes optiques des différents éléments du système de projection déplié sont perpendiculaires au plan de projection supposé vertical ; ils sont donc horizontaux (pour un système représentée sous une forme dépliée).

Néanmoins, selon des variantes de réalisation qui peuvent permettre le logement plus facile de la partie illumination (inclinaison du coeur optique d'illumination, boîtier de lampe, carte électronique rattachée à l'imageur 40), l'axe réel de l'objectif est incliné. En effet, l'axe d'un élément du système de projection peut devenir non horizontal après un pliage par un miroir de repli. Par exemple si le grand miroir est incliné, tous les éléments suivants seront aussi inclinés de l'angle double, en particulier le miroir concave. Préférentiellement, l'angle entre l'axe de l'objectif et le plan de projection est inférieur ou égal à 10°. De même, préférentiellement, l'angle entre l'axe de l'objectif et le grand coté de l'image projetée sur l'écran est inférieur ou égal à 10°. Préférentiellement, le miroir 162, fait un angle compris entre 40° et 50° avec un plan normal à l'écran 46.

La partie optique du projecteur possède un axe optique 166, le faisceau optique produit 165 étant décentré (et donc l'imageur 40) par rapport à cet axe 166. Le miroir concave 164 est tel que, vu de l'écran 46, le faisceau 165 semble provenir d'une zone pupillaire, correspondant à une pupille PF située entre le miroir 164 et l'écran 46 sur le trajet du faisceau d'imagerie 165.

Le miroir asphérique concave 164 a une forme de révolution dont la surface réfléchissante suit l'équation de surface asphérique suivante :

$$Z(r) = \frac{r^2/R}{1+\sqrt{1-(1+c)(r/R)^2}} + a_1 r + a_2 r^2 + a_3 r^3 + a_4 r^4 + a_5 r^5 + a_6 r^6 + ...$$

où :

- $r$ représente la distance à l'axe optique pour un point donné
- $Z$ représente la distance de ce point à un plan perpendiculaire à l'axe optique ;
- le coefficient c est la conique
- le paramètre $R$ correspond au rayon de courbure de la surface ;
- les paramètres $a_1$, $a_2$, ....$a_i$ sont des coefficients d'asphéricité respectivement d'ordre 1, 2 et $i$.

Selon une variante de réalisation, le miroir 164 est hyperbolique (c'est-à-dire avec des coefficients $a_i$ nuls selon l'équation de $Z(r)$ ci-dessus).

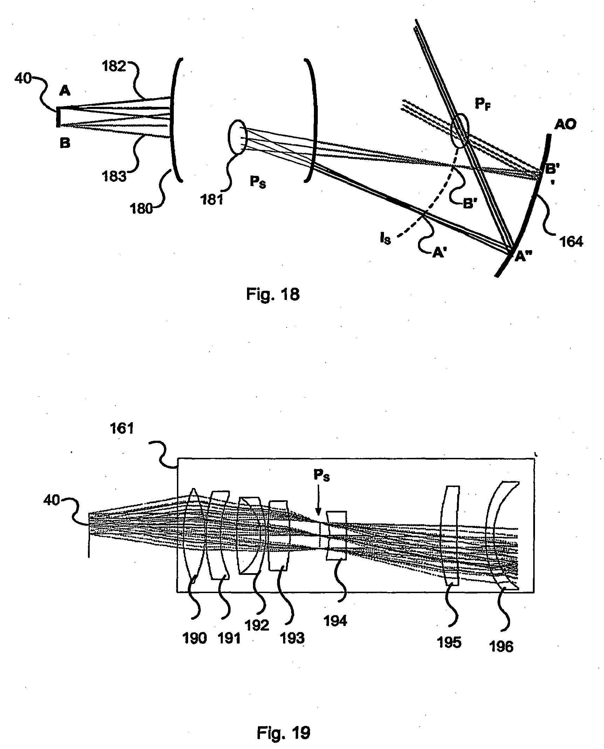

La **figure 19** présente plus en détail l'objectif 161.

L'objectif 161 comprend un groupe arrière de lentilles 190 à 193 et un groupe avant de lentilles 194 à 196.

La dernière lentille 196 de l'objectif 161, sur le trajet du faisceau d'imagerie est préférentiellement une lentille de type ménisque asphérique dont la forme est adaptée aux paramètres du miroir concave 164 ; sa forme suit donc préférentiellement une équation de surface asphérique comme présenté précédemment.

A titre illustratif, dans un mode de réalisation particulier le rayon R du miroir concave 164 est égal à 60, les paramètres $c$, et $a1$ à $a8$ valent respectivement -1,59311mm ; 0; 0; $-8,9410^{-6}$ ; 0 ; $1,64.10^{-9}$; $-9,74.10^{-13}$; $-7,84.10^{-4}$ et $2,31.10^{-16}$. Le rayon R de la première surface (coté imageur) du ménisque 196 est égal à 44,94711mm, les paramètres $c$, et $a1$ à $a8$ valent respectivement 0 ; 0 ; 0 ; $-3,110^{-4}$ ; $2,88.10^{-5}$ ; $1,96.10^{-6}$; $7,14.10^{-8}$ ; $4,15.10^{-10}$ et $-4,30.10^{-10}$. Le rayon R de la deuxième surface (coté imageur) du ménisque 196 est égal à 29.49554mm, les paramètres $c$, et $a1$ à $a8$

valent respectivement 0 ; 0 ; 0 ; $-2{,}710^{-4}$ ; $9{,}97.10^{-6}$ ; $6{,}34.10^{-7}$ $-1{,}41.10^{-7}$ ; $8{,}98.10^{-9}$ et $-1{,}78.10^{-10}$.

Le rétroprojecteur 16 présente l'avantage d'avoir une hauteur *h'* sous écran relativement faible, typiquement comprise entre 10 et 20 cm pour un écran de diagonale d'environ 1,50m. Cette hauteur *h'* est en effet suffisante pour loger l'objectif 161 et le miroir 164 tout en formant une image correcte sur l'écran 46 sans que le faisceau d'imagerie 165 ne rencontre l'objectif 161. Préférentiellement, la hauteur *h'* est égale au cinquième (environ) de la hauteur de l'écran ; plus précisément, la hauteur *h'* est inférieure ou égale à la hauteur de l'écran divisé par 5. Elle peut également dépendre du grandissement de l'objectif 161 ou du miroir concave 164, et du système d'illumination (taille du réflecteur de la lampe). Ainsi, pour un projecteur avec écran de 50" et DMD HD3, la hauteur *h'* est, par exemple, inférieure à 20 cm et typiquement égale à 12 cm.

Selon une variante de l'invention, l'axe de l'objectif 161 du rétroprojecteur 16 plié n'est pas horizontal, le rétroprojecteur 16 comprenant deux ou plus miroirs de repli positionnés entre l'objectif et le miroir concave 164, pour renvoyer le faisceau dans une direction sensiblement perpendiculaire et préférentiellement perpendiculaire à l'écran 46.

Selon d'autres variantes de réalisation de l'invention, l'axe du faisceau d'imagerie éclairant le miroir concave positionné après la première image sur le trajet du faisceau d'imagerie n'est pas horizontal. La forme du miroir concave est alors calculée pour construire une seconde image sur un plan de projection correspondant à l'écran de projection.

Le grand coté de l'imageur 40 du rétroprojecteur 16 est vertical (pour un écran de projection 46 vertical avec un grand coté horizontal).

Le rétroprojecteur 16 permet d'éliminer la contrainte de taille des lentilles de l'objectif 161 pour qu'il ne coupe pas le faisceau 165 de retour du miroir 164. Selon la configuration du rétroprojecteur 16, on peut également mettre en oeuvre des lentilles plus grosses car elles sont sous le faisceau 165 (on a une séparation plus facile des champs).

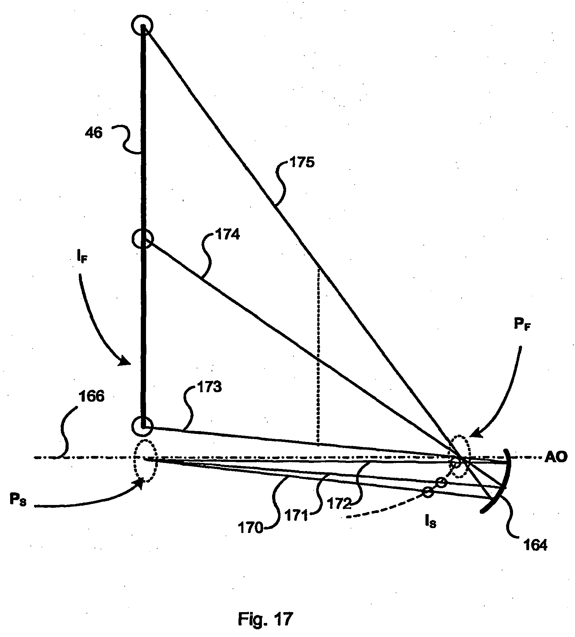

La **figure 17** présente les différentes images formées par le rétro-projecteur 16 (les faisceaux d'imagerie étant représentés dépliés).

Le rayon 174 représente le rayon central du faisceau d'imagerie 165 et les rayons 173 et 175 deux rayons extrêmes.

La pupille de sortie PS de l'objectif 161 forme une image IS située avant le miroir 164 sur le trajet du faisceau 165. L'objectif 161 agrandit l'image objet formée sur l'imageur 40 pour former l'image *IS* d'un facteur de grandissement *G*. Le facteur de grandissement *G* associé à l'objectif 161 est préférentiellement compris entre 1 et 10, et encore plus préférentiellement entre 5 et 9.

Le miroir 164 associe la pupille de sortie *PS* à une pupille *PF* où les rayons du faisceau d'imagerie se croisent dans une zone relativement réduite. La forme du miroir 164 est calculée pour créer une image *IF* correspondant à l'image *IS* projetée sur un plan de projection où est situé l'écran 46. Le miroir concave 164 agrandit l'image *IS* pour former l'image IF d'un facteur d'agrandissement *G'*. Le facteur de grandissement *G'* associé au miroir concave 164 est préférentiellement supérieur au facteur de grandissement *G* associé à l'objectif 161.

L'utilisation d'un miroir concave 164 positionné après la première image sur le trajet dudit faisceau d'imagerie présente l'avantage que la partie basse du faisceau d'imagerie correspondant au rayon 172 est relativement haute et permet donc de loger plus facilement des éléments optiques proche de l'écran (dans le cas d'un rétroprojecteur) et ne perturbant pas la propagation des faisceaux entre le miroir concave et l'écran.

Selon une variante de réalisation, Le facteur de grandissement *G'* associé au miroir concave 164 est supérieur à 10.

Le miroir concave 164 est préférentiellement situé en dessous de l'axe optique. Préférentiellement, l'axe optique du système avant le miroir concave 164 est horizontal et proche du point bas de l'écran 46.

La **figure 18** illustre les propriétés optiques du rétroprojecteur 16. Plus précisément, l'imageur 40 crée une première image comprenant deux points *A* et *B* indiqués à titre illustratif. De ces deux points *A* et *B*, sont issus respectivement deux faisceaux 182 et 183 qui forment après passage dans l'objectif 161 comprenant au moins une lentille 180 et une pupille de sortie *PS* 181 deux points *A'* et *B'* appartenant à l'image *IS* créée par l'objectif 161.

Les faisceaux 183 et 182 se réfléchissent respectivement dans des zones *A"* et *B"* non ponctuelles sur le miroir 164 et convergent dans une zone correspondant à la pupille *PF*, image de la pupille *PS* par le miroir 164.

On note que la pupille *PF* est relativement proche du miroir 164 et que la pupille *PS* est plus éloignée du miroir 164. Typiquement, la distance de la zone pupillaire de sortie *PF* au vertex du miroir concave 164 est comprise entre 25 mm et 60 mm. Préférentiellement, la distance de pupille de sortie 181 au miroir concave 21 doit être la plus grande possible.

L'homme du métier pourra, en outre, définir l'objectif et le miroir concave de repli et qui construit une seconde image sur un plan de projection à partir d'une première image positionnée avant le miroir concave, pour notamment adapter les corrections d'astigmatismes et de distorsions optiques selon des critères particuliers et les répartir entre les différents optiques du système de projection.

Selon une variante de réalisation de l'invention, le projecteur 16 est équipé d'un cache associé à au moins un des miroirs de renvoi 162 et 163 pour empêcher la propagation des rayons parasites.

Selon une variante de réalisation de l'invention, le projecteur comprend un socle similaire au socle 98 qui peut être relativement étroit (tel que décrit en regard de la figue 9) et qui comprend des éléments optiques similaires aux éléments du projecteur 16, (notamment un miroir concave) dont les axes optiques correspondent à ceux illustrés dans le projecteur 9 pour les éléments correspondant (notamment l'angle $\gamma1$ que fait l'axe de l'objectif avec l'écran et qui est, préférentiellement, inférieur ou égal à 25°).

Selon une variante de réalisation de l'invention, le projecteur est de type projecteur frontal mettant en oeuvre un miroir courbe concave. Ainsi, un tel projecteur comprend, par exemple, les éléments du projecteur 16 à l'exception du miroir de repli situé après le miroir concave et écran, dans une configuration similaire à celle du projecteur 16 pour les éléments du moteur optique et des miroirs de repli et à celle du projecteur illustré en regard de la figure 12 pour les parties spécifiques à la projection frontale.

Bien entendu, l'invention ne se limite pas aux modes de réalisation décrits précédemment

En particulier, le rétroprojecteur suivant l'invention comprend un miroir courbe qui peut être notamment asphérique ou hyperbolique pour assurer l'agrandissement du faisceau.

Le miroir courbe est notamment un miroir concave ou convexe. L'invention est également compatible avec un miroir courbe en partie concave ou convexe (par exemple, miroir en partie concave et en partie convexe, ou miroir en partie plan et en partie concave ou convexe, ou miroir en partie plan, en partie concave et en partie convexe).

L'invention s'applique à tout projecteur dont l'encombrement est réduit, notamment au cas où une partie latérale placée à coté, au dessus ou au dessous de l'écran et comprenant des éléments optiques.

Les surfaces de renvoi planes situées entre l'objectif et le miroir convexe ou entre la lampe et l'image peuvent être, selon invention de tout type et notamment des surfaces réfléchissantes ou semi-réfléchissantes de type miroir ou prismes avec une face réfléchissante.

Le nombre et le positionnement des surfaces de renvoi réfléchissantes ou semi-réfléchissantes placées entre l'objectif et le miroir convexe sur le trajet du faisceau d'imagerie ne sont pas non plus limités aux modes de réalisation décrits précédemment. Ainsi, selon l'invention, il peut y avoir deux ou plus surfaces de renvoi placés entre le système optique et le miroir convexe sur le trajet du faisceau d'imagerie, notamment deux, trois ou quatre. Ainsi, selon l'invention, des modes de réalisation peuvent mettre en oeuvre trois, quatre ou encore plus de surfaces de renvoi permettant de rediriger le faisceau d'imagerie dans différents plans non perpendiculaires à l'écran (par exemple dans une configuration où l'objectif est placé sensiblement verticalement sur une partie latérale du projecteur, une première surface réfléchissante renvoyant le faisceau d'imagerie horizontalement vers une deuxième surface réfléchissante qui renvoie le faisceau verticalement vers une troisième surface de renvoi qui redirige le faisceau vers un miroir convexe).

De même, le nombre et le positionnement des surfaces de renvoi réfléchissantes ou semi-réfléchissantes (notamment miroirs ou prismes avec une face réfléchissante) placées entre la source d'illumination et l'imageur sur le trajet du faisceau d'illumination ne sont pas non plus limités aux modes de réalisation décrits précédemment. Ainsi, selon l'invention, il peut y avoir deux ou plus surfaces de renvoi placés entre la source d'illumination et l'imageur sur le trajet du faisceau d'illumination, notamment deux, trois ou quatre. Ainsi, selon l'invention, des modes de réalisation peuvent mettre en oeuvre trois, quatre ou encore plus de surfaces de renvoi permettant de rediriger le faisceau d'illumination vers l'imageur.

**Revendications**

**1.** Module de projection destiné à projeter une image sur un écran (46, 96, 121) définissant un plan de projection déterminé, ledit module comprenant :

- un objectif (41, 91, 161) comprenant un groupe de lentilles arrière (410, GrAr) et un groupe de lentilles avant (412, GrAv), qui comprend des moyens d'émission d'un faisceau d'imagerie (47, 97) ; et
- un miroir courbe convexe (44, 94, 164) en forme de conique placé entre ledit écran et ledit objectif,

**caractérisé en ce que** :

- ledit module comprend au moins deux surfaces de renvoi (42, 43, 92, 93, 162, 163) dudit faisceau d'imagerie, placées sur le trajet dudit faisceau d'imagerie entre ledit objectif et ledit miroir courbe ;
- ledit groupe arrière de lentilles (GrAR) comporte une lentille ayant une surface en forme de conique,
- la conique décrivant la surface de ladite lentille est du même type que la forme dudit miroir convexe.

**2.** Module selon la revendication 1, **caractérisé en ce que** ledit miroir courbe (44, 94, 164) est hyperbolique.

**3.** Module selon la revendication 2, **caractérisé en ce que** ledit miroir hyperbolique est disposé du côté de la sortie dudit l'objectif de telle façon que l'axe passant par les foyers de l'hyperbole décrivant la surface dudit miroir hyperbolique coïncide avec l'axe optique (XX') dudit groupe de lentilles arrière (410).

4. Module selon la revendication 3, **caractérisé en ce que** ledit miroir hyperbolique est positionné par rapport au dit groupe de lentilles avant (GrAV) de manière à ce que l'un des foyers (F1) de l'hyperbole décrivant la surface dudit miroir hyperbolique soit situé dans le plan de la pupille de sortie dudit groupe de lentilles avant (GrAV) et de manière à ce que l'autre foyer virtuel (F2) de l'hyperbole soit situé dans le plan de la pupille de sortie virtuelle dudit objectif.

5. Module selon l'une quelconque des revendications 2 à 4, **caractérisé en ce que** la forme de la surface conique de ladite lentille du groupe arrière (GrAR) est adaptée pour que le rapport de cette conique à la conique dudit miroir hyperbolique soit sensiblement proportionnel au rapport des distances des foyers de l'hyperbole décrivant la surface dudit miroir hyperbolique aux plans principaux de l'hyperbole.

6. Module selon l'une quelconque des revendications précédentes, **caractérisé en ce que**, l'image projetée étant rectangulaire, l'angle entre l'axe dudit objectif et le grand coté de l'image projetée sur ledit écran est inférieur ou égal à 10°.

7. Module selon l'une quelconque des revendications précédentes, **caractérisé en ce qu'**au moins une desdites surfaces de renvoi est adaptée à rediriger le faisceau d'imagerie, issu de l'objectif vers ledit miroir courbe dans un plan perpendiculaire audit plan de projection.

8. Module selon l'une quelconque des revendications précédentes, **caractérisé en ce qu'**au moins une desdites surfaces de renvoi fait un angle compris entre 40° et 50° avec un plan normal audit plan de projection.

9. Module selon l'une quelconque des revendications précédentes, **caractérisé en ce que** lesdites surfaces de renvoi sont planes.

10. Module selon l'une quelconque des revendications précédentes, **caractérisé en ce qu'**il comprend au moins un cache (80, 81, 82) associé à au moins une desdites surfaces de renvoi et adapté à empêcher la propagation de rayons parasites (83, 84, 85).

**Patentansprüche**

1. Projektionsmodul, das dazu vorgesehen ist, ein Bild auf einen Bildschirm (46, 96, 121) zu projizieren, der eine bestimmte Projektionsebene definiert, wobei das besagte Modul Folgendes umfasst:

- ein Objektiv (41, 91, 161), das eine hintere Gruppe von Linsen (410, GrAr) und eine vordere Gruppe von Linsen (412, GrAv) umfasst und das Mittel zur Ausstrahlung eines Abbildungsstrahls (47, 97) umfasst; und
- einen konvexen gewölbten Spiegel (44, 94, 164) in Konusform, der zwischen dem besagten Bildschirm und dem besagten Objektiv platziert ist,

**dadurch gekennzeichnet, dass**:

- das besagte Modul mindestens zwei Oberflächen (42, 43, 92, 93, 162, 163) zur Umlenkung des besagten Abbildungsstrahls umfasst, die in dem Weg des besagten Abbildungsstrahls zwischen dem besagten Objektiv und dem besagten gewölbten Spiegel platziert sind;
- die besagte hintere Gruppe von Linsen (GrAR) eine Linse mit einer Oberflächen in Konusform umfasst,
- der Konus, der die Oberfläche der besagten Linse umschreibt, von derselben Art wie die Form des besagten konvexen Spiegels ist.

2. Modul nach Anspruch 1, **dadurch gekennzeichnet, dass** der besagte gewölbte Spiegel (44, 94, 164) hyperbolisch ist.

3. Modul nach Anspruch 2, **dadurch gekennzeichnet, dass** der besagte hyperbolische Spiegel an der Seite des Austritts des besagten Objektivs angeordnet ist, so dass die Achse, die durch die Fokusse der Hyperbel, die die Oberfläche des besagten hyperbolischen Spiegels umschreibt, verläuft, mit der optischen Achse (XX') der besagten hinteren Gruppe von Linsen (410) zusammenfällt.

**4.** Modul nach Anspruch 3, **dadurch gekennzeichnet, dass** der besagte hyperbolische Spiegel in Bezug auf die genannte vordere Gruppe von Linsen (GrAV) positioniert ist, so dass einer der Fokusse (F1) der Hyperbel, die die Oberfläche des besagten hyperbolischen Spiegels umschreibt, sich in der Ebene der Austrittspupille der besagten vorderen Gruppe von Linsen (GrAV) befindet und so dass der andere virtuelle Fokus (F2) der Hyperbel sich in der Ebene der virtuellen Austrittspupille des besagten Objektivs befindet.

**5.** Modul nach einem der Ansprüche 2 bis 4, **dadurch gekennzeichnet, dass** die Form der konischen Oberfläche der besagten Linse der hinteren Gruppe (GrAR) so eingerichtet ist, dass das Verhältnis dieses Konus zu dem Konus des besagten hyperbolischen Spiegels im Wesentlichen proportional zu dem Verhältnis von Abständen von Fokussen der Hyperbel, die die Oberfläche des besagten hyperbolischen Spiegels umschreibt, zu den Hauptebenen der Hyperbel ist.

**6.** Modul nach einem der vorhergehenden Ansprüche, **dadurch gekennzeichnet, dass** das projizierte Bild rechteckig ist, wobei der Winkel zwischen der Achse des besagten Objektivs und der Längsseite des auf den besagten Bildschirm projizierten Bilds kleiner gleich 10° ist.

**7.** Modul nach einem der vorhergehenden Ansprüche, **dadurch gekennzeichnet, dass** mindestens eine der besagten Umlenkoberflächen dazu eingerichtet ist, den Abbildungsstrahl, der von dem Objektiv kommt, in Richtung des besagten gewölbten Spiegels in einer Ebene, die senkrecht zu der besagten Projektionsebene ist, umzuleiten.

**8.** Modul nach einem der vorhergehenden Ansprüche, **dadurch gekennzeichnet, dass** mindestens eine der besagten Umlenkoberflächen einen Winkel zwischen 40° und 50° mit einer Ebene, die lotrecht zu der besagten Projektionsebene ist, bildet.

**9.** Modul nach einem der vorhergehenden Ansprüche, **dadurch gekennzeichnet, dass** die besagten Umlenkoberflächen eben sind.

**10.** Modul nach einem der vorhergehenden Ansprüche, **dadurch gekennzeichnet, dass** es mindestens eine Maske (80, 81, 82) umfasst, die mit mindestens einer der besagten Umlenkoberflächen assoziiert ist und dazu eingerichtet ist, die Ausbreitung von Störstrahlen (83, 84, 85) zu verhindern.

**Claims**

**1.** Projection module intended to project an image onto a screen (46, 96, 121) defining a determined projection plane, said module comprising:

- an objective (41, 91, 161) comprising a group of rear lenses (410, GrAr) and a group of front lenses (412, GrAv), that comprise means for transmitting an image beam (47, 97); and
- a convex curved mirror (44, 94, 164) in conical form placed between said screen and said objective, **characterized in that**:

- said module comprises at least two deflecting surfaces (42, 43, 92, 93, 162, 163) of said image beam, placed on the trajectory of said image beam between said objective and said curved mirror,
- said rear group of lenses (GrAR) comprises a lens having a surface in conical form,
- the conical section describing the surface of said lens is of the same type as the form of said convex mirror.

**2.** Module according to claim 1, **characterized in that** said curved mirror (44, 94, 164) is hyperbolic.

**3.** Module according to claim 2, **characterized in that** said hyperbolic mirror is arranged on the side of the output of said objective in such a manner that the axis passing through the foci of the hyperbola describing the surface of said hyperbolic mirror coincides with the optical axis (XX') of said group of rear lenses (410).

**4.** Module according to claim 3, **characterized in that** said hyperbolic mirror is positioned in relation to said group of front lenses (GrAV) such that one of the foci (F1) of the hyperbola describing the surface of said hyperbolic mirror is located in the plane of the exit pupil of said group of front lenses (GrAV) and such that the other virtual focus (F2) of the hyperbola is located in the plane of the virtual exit pupil of said objective.

**5.** Module according to any one of claims 2 to 4, **characterized in that** the form of the conical surface of said lens of the rear group (GrAR) is adapted so that the ratio of this conical section to the conical section of said hyperbolic mirror is noticeably proportional in relation to the distances of the foci of the hyperbola describing the surface of said hyperbolic mirror on the main planes of the hyperbola.

**6.** Module according to any one of the previous claims, **characterized in that** the projected image being rectangular, the angle between the axis of said objective and the large side of the image projected onto said screen is less than or equal to 10°.

**7.** Module according to any one of the previous claims, **characterized in that** at least one of said deflecting surfaces is adapted to redirect the image beam, from the objective to said curved mirror in a plane perpendicular to said projection plane.

**8.** Module according to any one of the previous claims, **characterized in that** at least one of said deflecting surfaces makes an angle of between 40° and 50° with a normal plane to said projection plane.

**9.** Module according to any one of the previous claims, **characterized in that** said deflecting surfaces are flat.

**10.** Module according to any one of the previous claims, **characterized in that** it comprises at least one cache (80, 81, 82) associated with at least one of said deflecting surfaces and adapted to prevent the propagation of spurious rays (83, 84, 85)

EP 1 745 329 B1

ETAT DE L'ART

ETAT DE L'ART

Figure 1

Figure 2

16

ETAT DE L'ART

Figure 3

Figure 4

Figure 5

Figure 6

Figure 7

Figure 8

Figure 9

Figure 10

Figure 11

Figure 12

Figure 13

Figure 14

27

Figure 15

**Fig. 16**

Fig. 17

Fig. 18

Fig. 19

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1203977 A
- US 20020181130 A1
- US 20020057421 A1
- DE 19737861 C1
- US 5716118 A